# EUROPÄISCHE PATENTSCHRIFT

(11) **EP 0 874 150 B1**
(45) Veröffentlichungstag und Bekanntmachung des Hinweises auf die Patenterteilung: **23.07.2003**
(21) Anmeldenummer: 98106469.4
(22) Anmeldetag: 08.04.1998
(51) Int. Cl.: F02D 37/02, F02D 13/02, F02D 43/00, F02P 5/04, F02D 41/14

(54) **Hochleistungsmotor mit sehr niedriger Schadstoffemission**
High power engine with very low pollutant emission
Moteur à grande puissance, à émissions polluantes réduites

(30) Priorität: 23.04.1997 DE 19716916
(43) Veröffentlichungstag der Anmeldung: 28.10.1998
(73) Patentinhaber: Dr.Ing.h.c. F. Porsche Aktiengesellschaft, 70435 Stuttgart (DE)
(72) Erfinder: Brüstle, Claus, 70839 Gerlingen (DE)

(56) Entgegenhaltungen:
- DE-A- 4 135 965
- US-A- 5 133 310
- US-A- 5 293 741
- US-A- 5 622 144
- PATENT ABSTRACTS OF JAPAN vol. 017, no. 027 (M-1355), 19. Januar 1993 (1993-01-19) & JP 04 252838 A (MAZDA MOTOR CORP), 8. September 1992 (1992-09-08)

## Beschreibung

Die Erfindung betrifft eine Brennkraftmaschine nach dem Oberbegriff des Patentanspruches 1 sowie ein Verfahren zum Betrieb einer Brennkraftmaschine.

Wesentliches Entwicklungsziel bei modernen Brennkraftmaschinen ist eine Reduktion der Schadstoffemissionen. Bisherige Entwicklungsaktivitäten hatten vor allem eine Optimierung des Abgasreinigungssystemes zum Ziel. Moderne Abgasreinigungssysteme erzielen inzwischen Umwandlungsraten für die Schadstoffe von über 97%, so daß eine weitere Reduktion der Schadstoffemissionen durch Abgasnachbehandlungssysteme kaum mehr möglich ist.

Das Dokument US-A-5293741 offenbart eine Verschiebung des Zündzeitpunktes nach spät mit gleichzeitiger Verschiebung der Öffnungszeit des Auslaßventils nach spät während des **lastlosen** Betriebszustands der Brennkraftmaschine, um damit eine schnellere Aufwärmung zu erreichen.
Dagegen ist die Aufgabe und die Lösung die vom Anspruch 1 vorgeschlagen wird eine andere, nämlich im **Teillastbereich** die Verschiebung nach spät des Zündzeitpunktes und des Auslaßventils so anzusteuern daß die HC-Emissionen reduziert werden.

Es ist daher Aufgabe der Erfindung, eine Brennkraftmaschine sowie ein Verfahren zum Betrieb einer Brennkraftmaschine zu schaffen, mit der die Schadstoffemissionen weiter reduziert und auch verschärfte Grenzwerte für Schadstoffemissionen erreicht werden können, wie sie beispielsweise für Ultra low emission vehicles, kurz ULEV, gefordert werden.

Diese Aufgabe wird mit den Merkmalen der unabhängigen Patentansprüche gelöst. Der Erfindung liegt dabei die Erkenntnis zugrunde, daß zur weiteren Verminderung der Schadstoffemissionen und zum Erreichen noch schärferer Grenzwerte eine deutliche Absenkung der Rohemissionen der Brennkraftmaschine notwendig ist.

Erfindungsgemäß wird vorgeschlagen, eine für die Auslaßnockenwelle vorgesehene Verstellvorrichtung in einem Teillastbereich so anzusteuern, daß die Auslaßnockenwelle in Richtung "spät" verschoben wird. Gleichzeitig sorgt eine Zündsteuereinrichtung dafür, daß der Zündzeitpunkt in Richtung "spät" verschoben wird. Die Verstellung des Zündzeitpunktes bewirkt eine weitere Verminderung der HC-Emissionen. Gleichzeitig wird die durch die Verstellung der Auslaßnockenwelle erzielten Verminderung des spezifischen Kraftstoffverbrauches wieder kompensiert. Insgesamt allerdings werden mit Hilfe der Kombination dieser beiden Maßnahmen die spezifischen HC-Emissionen der Brennkraftmaschine deutlich abgesenkt.

Vorteilhafte Weiterbildungen der Erfindung sind in den Unteransprüchen beschrieben.

Eine besonders vorteilhafte Auslegung der beiden vorgeschriebenen Maßnahmen kann dadurch erreicht werden, daß der Zündzeitpunkt soweit in Richtung "spät" verschoben wird, daß die durch die Verstellung der Auslaßnockenwelle erzielte Verbesserung des spezifischen Brennstoffverbrauches wieder im wesentlichen kompensiert wird. Bei dieser Auslegung ist eine deutliche Reduktion der HC-Emissionen erreicht, ohne daß der spezifischer Brennstoffverbrauch erhöht würde. Gleichzeitig wird durch die Rücknahme des Zündzeitpunktes die Abgastemperatur erhöht, wodurch ein schnelleres Aufheizen eines der Brennkraftmaschine nachgeschalteten Abgassystems erreicht ist.

Eine weitere Verringerung der Rohemission läßt sich durch Einsatz einer Verstelleinrichtung für die Einlaßnockenwelle erzielen. Mit einer Verstellung der Einlaßnockenwelle in Richtung früh zusätzlich zu der vorbeschriebenen Verstellung der Auslaßnockenwelle können sowohl die spezifischen HC-Emissionen wie auch der spezifischen Brennstoffverbrauchs weiter reduziert werden. Wiederum kann für eine optimale Reduktion der HC-Emissionen die Lage des Zündzeitpunktes so verschoben werden, daß eine maximale Reduktion der HC-Emissionen bei gleichbleibendem spezifischen Brennstoffverbrauch erreicht ist.

Eine darüber hinaus zusätzlich vorgesehene Umschaltung des Hubes der Einlaßnockenwelle erschließt ein weiteres Potential zur Reduktion der Rohemissionen der Brennkraftmaschine, da bei geringerem Ventilhub aus geometrischen Gründen das Einlaßmittel noch weiter in Richtung früh verschoben werden kann.

Die beiden zusätzlichen Maßnahmen zur Einflußnahme auf die Einlaßnockenwelle haben zum Ziel, den Überschneidungsbereich zwischen den Auslaß- und den Einlaßventilen (d.h. den Bereich, in dem Auslaßund Einlaßventile gleichzeitig geöffnet sind) sowie dem Zeitpunkt des Schließens der Einlaßventile in eine optimale Lage zu bringen. Diese optimale Lage ist von den Verbrennungsbedingungen innerhalb der Brennkraftmaschine abhängig und daher für jede Brennkraftmaschine getrennt zu bestimmen. Wird insbesondere der Optimalwert des Überschneidungsbereiches überschritten, so führt dies zu einer raschen Verschlechterung des Verbrennungsvorganges und damit zu sprunghaft ansteigenden Rohemissionen. Hierdurch sind der Beeinflussung der Einlaßnockenwelle Grenzen gesetzt.

Die Erfindung ist nachstehend anhand des in den Figuren dargestellten Ausführungsbeispieles näher erläutert.

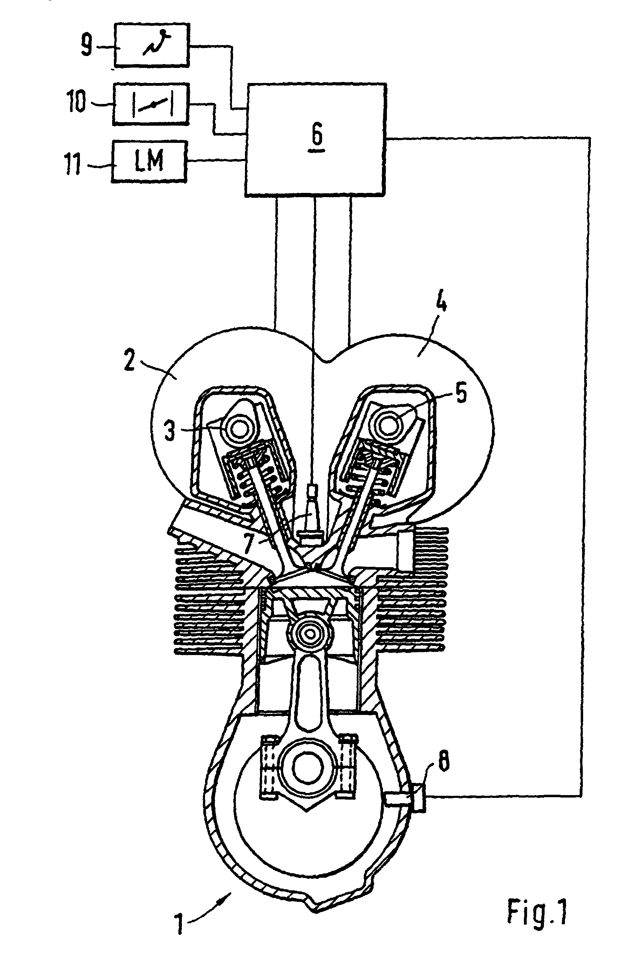

Es zeigen
- Fig. 1: einen Schnitt durch eine Brennkraftmaschine,
- Fig. 2: ein Diagramm der Verstellbereiche der Auslaßventile und der Einlaßventile;
- Fig. 3: ein Diagramm des spezifischen Kraftstoffverbrauches sowie der HC-Emissionen abhängig von einer Stellung einer Auslaßnockenwellenverstellung und
- Fig. 4: ein Diagramm der HC-Rohemissionen mit und ohne Einsatz der erfindungsgemäßen Vorrichtung.

Eine Brennkraftmaschine 1 ist mit einer ersten Verstelleinrichtung 2 für eine Einlaßnockenwelle 3 sowie einer zweiten Verstelleinrichtung 4 für eine Auslaßnockenwelle 5 versehen. Ein Motorsteuergerät 6 steuert die erste Verstelleinrichtung 2 wie auch die zweite Verstelleinrichtung 4 an. Zusätzlich wird eine Zündeinrichtung 7 der Brennkraftmaschine 1 ebenfalls vom Motorsteuergerät 6 angesteuert. Da, wie weiter unten dargestellt, die Ansteuerung der Verstelleinrichtungen 2,4 und der Zündeinrichtung 7 in Abhängigkeit voneinander erfolgt, ist eine gemeinsame Ansteuerung durch ein einziges Motorsteuergerät besonders einfach. Für die Ansteuerung der Verstelleinrichtungen 2,4 und der Zündeinrichtung 7 erhält und verarbeitet das Motorsteuergerät 6 unter anderem Signale eines Kurbelwellenwinkelgebers 8,eines Temperaturgebers 9, eines Temperaturgebers 10 sowie eines Luftmassengebers 11.

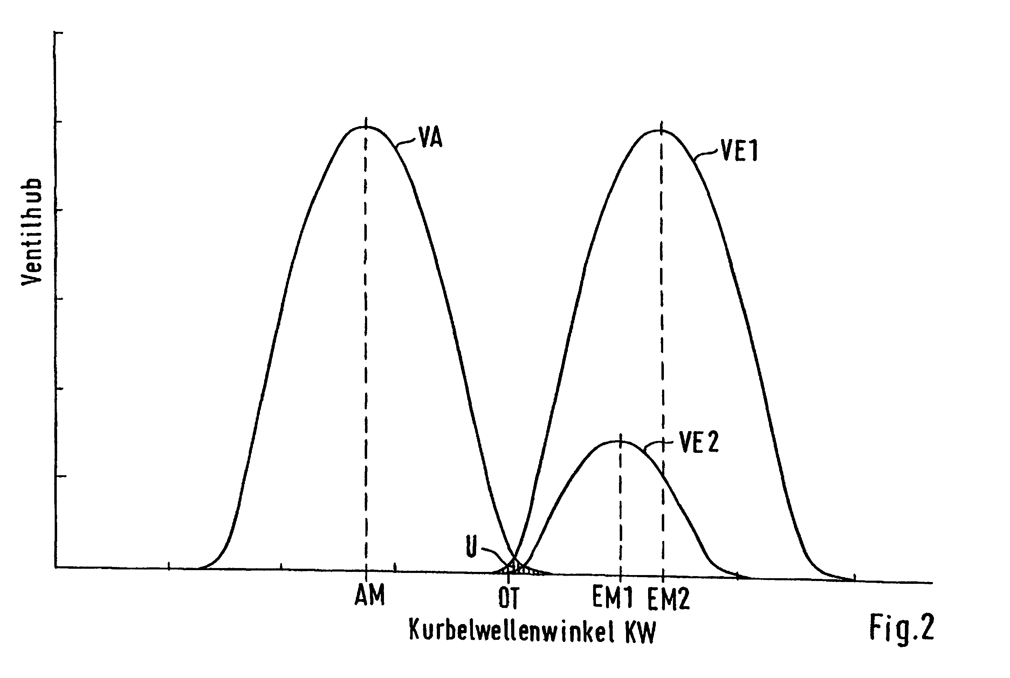

Die Wirkung der zweiten Verstelleinrichtung 4 ist in dem Diagramm nach Fig. 2 für die Steuerzeiten der Auslaßnockenwelle 5 dargestellt. Aufgetragen ist der Ventilhub, d.h. der Hub VA der Auslaßnockenwelle 5 über dem Kurbelwellenwinkel KW. Der obere Totpunkt ist mit OT bezeichnet; an diesem Punkt nimmt der Kurbelwellenwinkel KW den Wert Null an. Der größte Wert des Hubes VA ist als Auslaßmittel AM bezeichnet. Eine Verstellung der Auslaßnockenwelle 5 in Richtung "spät" stellt sich in Fig. 2 als Verschiebung der Kurve VA nach rechts dar.

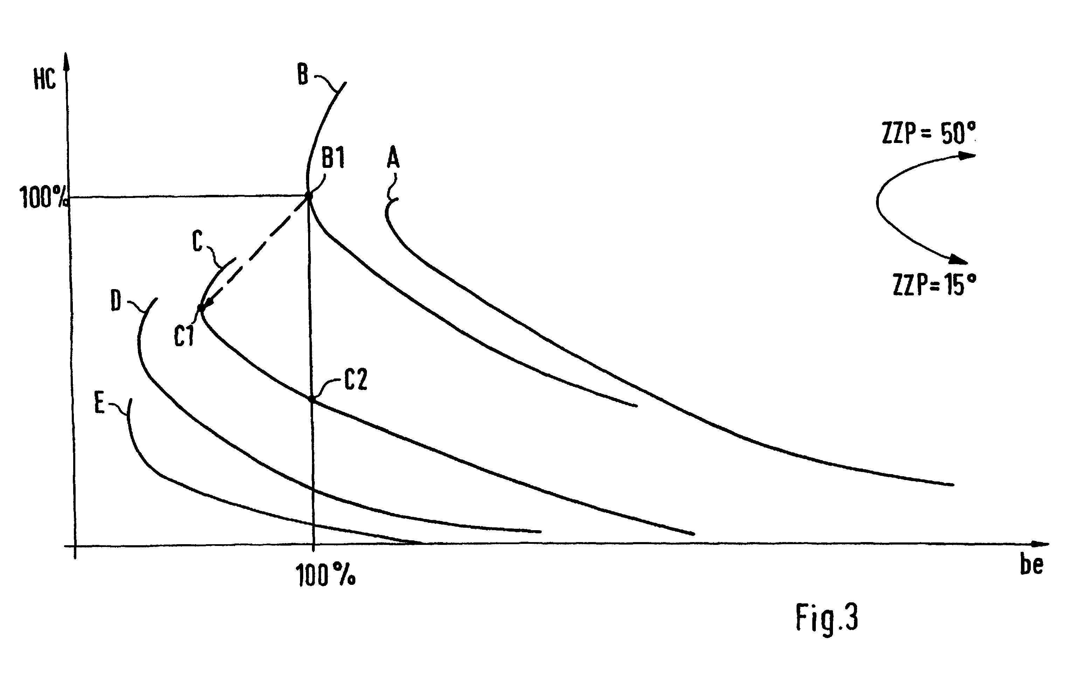

Die Funktionsweise der Motorsteuereinrichtung 6 im Hinblick auf die Ansteuerung der zweiten Verstelleinrichtung 4 ist nachfolgend anhand des in Fig. 3 dargestellten Diagrammes näher erläutert. In diesem Diagramm sind Kurven des spezifischen Kraftstoffverbrauches be über den spezifischen HC-Emissionen HC für verschiedene Zündzeitpunkte ZZP aufgetragen. In dem Diagramm sind Bereiche des Zündzeitpunktes ZZP von 50° vor dem oberen Totpunkt OT bis 15° vor dem oberen Totpunkt OT dargestellt. Die drei dargestellten Kurven A, B, C unterscheiden sich hinsichtlich des mittels der zweiten Verstelleinrichtung 4 eingestellten Winkels der Auslaßnockenwelle 5: Bei der Kurve A ist ein Auslaßmittel AM von 154°, bei der Kurve B ein Auslaßmittel AM von 113° und bei Kurve C ein Auslaßmittel AM von 102° Kurbelwellenwinkel KW vor dem oberen Totpunkt OT eingestellt. Dem Diagramm liegt eine konstante Drehzahl, hier 2000 U/min, der Brennkraftmaschine 1 sowie eine feste Winkeleinstellung der ersten Verstelleinrichtung 2 und damit auch der Einlaßnockenwelle 5 zugrunde.

Die Kurve A zeigt zum Vergleich die Situation bei einem Auslaßmittel von 154° Kurbelwellenwinkel.

Die Kurve B zeigt eine Einstellung der Auslaßnockenwelle 5, wie sie als Ergebnis einer Optimierung auf minimalen spezifischen Kraftstoffverbrauch be und minimale spezifische HC-Emissionen HC bei Vollast der Brennkraftmaschine 1 gewählt wird. Als Ergebnis dieser Optimierung ergibt sich einschließlich der Einstellung des Zündwinkels ZZP der Betriebspunkt B1. Zum Vergleich der Kurven a, B und C untereinander sind die Werte für den spezifischen Kraftstoffverbrauch be und die spezifischen HC-Emissionen HC für diesen Betriebspunkt B1 mit je 100% angesetzt.

Wie aus Kurve C zu erkennen ist, ist in dem dargestellten Teillast-Betriebsbereich noch weiteres Potential für eine Optimierung des spezifischen Kraftstoffverbrauches be und der spezifischen HC-Emissionen HC durch Verstellung der Auslaßnockenwelle 5 in Richtung "spät" vorhanden. In dem in Fig. 3 dargestellten Betriebsbereich erscheint der Betriebspunkt C1 hinsichtlich des spezifischen Kraftstoffverbrauches be und der spezifischen HC-Emissionen HC optimal. Basierend auf der Erkenntnis, daß für eine weitere Absenkung der Gesamt-Schadstoffemissionen der Brennkraftmaschine 1 einschließlich des nicht dargestellten Abgassystemes eine Minderung der von der Brennkraftmaschine 1 direkt erzeugten Rohemissionen von entscheidender Bedeutung ist, wird jedoch statt dessen der Betriebspunkt C2 eingestellt. In diesem Betriebspunkt C2 wird derselbe spezifische Kraftstoffverbrauch wie im zuvor eingestellten Betriebspunkt B1 erreicht; gleichzeitig wird aber eine Reduktion der spezifischen HC-Emissionen HC um 30° erzielt. Ein Vergleich mit dem Betriebspunkt C1 zeigt, daß dies eine Reduktion der spezifischen HC-Emissionen HC um nochmals 11° darstellt.

Kurz gesagt stellt die Motorsteuerung 6 die Winkellage der Auslaßnockenwelle 5 und gleichzeitig die Lage des Zündzeitpunktes ZZP so ein, daß eine Reduktion der spezifischen HC-Emissionen HC bei gleichbleibendem spezifischen Kraftstoffverbrauch be erreicht ist.

Zusätzlich ist eine Beeinflussung der Lage der Einlaßnockenwelle 3 durch die erste Verstelleinrichtung 2 vorgesehen. in dem Diagramm nach Fig. 2 sind die Steuerzeiten der Einlaßnockenwelle 3 als erster Hub VE1 über dem Kurbelwellenwinkel KW dargestellt. Der größte Wert des Hubes VE1 ist als erstes Einlaßmittel EM1 bezeichnet. Eine Verstellung der Einlaßnockenwelle 5 in Richtung "früh" stellt sich in Fig. 2 als Verschiebung der Kurve VE1 nach links dar. Nicht näher dargestellt ist eine Vorrichtung zur Verminderung des Hubes der Einlaßnockenwelle 3 nach der zweiten Kurve VE2 für die Einlaßnockenwelle 3. Hier ist der größte Wert des Hubes VE2 ist als zweites Einlaßmittel EM2 bezeichnet. Der Bereich, in dem sich die Kurve VA der Auslaßnockenwelle 5 wie auch die Kurve VE1 der Einlaßnockenwelle 3 (bzw. die Kurve VE2 bei vermindertem Hub der Einlaßnockenwelle 3) überlappen, ist als Überschneidungsbereich U gekennzeichnet.

Die in Fig. 3 ferner dargestellten Kurven D und E zeigen den Einfluß der zusätzlichen Verstellung der Einlaßnockenwelle 3 - Kurve D - und der zusätzlichen Verminderung des Hubes der Einlaßnockenwelle 3 - Kurve E -. Auch hier wird für eine optimale Reduktion der spezifischen HC-Emissionen HC der Zündzeitpunkt ZZP so eingestellt, daß der spezifische Kraftstoffverbrauch be im wesentlichen unverändert bleibt.

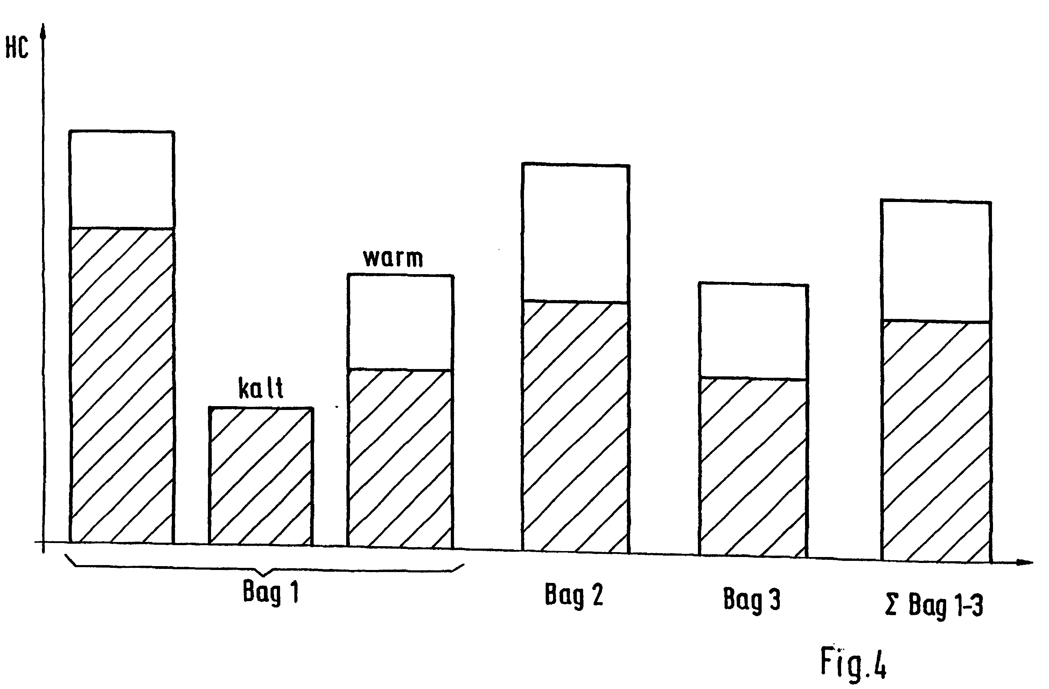

Fig. 4 zeigt in Form eines Diagrammes das Ergebnis der beschriebenen Verstellung der Auslaßnockenwelle 5 auf das Ergebnis eines FTP-Abgastestes. Die schraffierten Balken zeigen die Werte der HC-Rohemissionen HC bei einer Verstellung der Auslaßnockenwelle 5, wie sie zuvor beschrieben wurde, im Vergleich mit den nicht schraffierten Balken beim Betrieb ohne Verstellung der Auslaßnockenwelle 5. Bei diesem Abgastest werden die Abgase des Fahrzeuges in drei Beuteln, sogenannten Bags, gesammelt. Bag 1 enthält hierbei sowohl einen Abgasanteil bei betriebswarmer Brennkraftmaschine 1 wie auch ein Abgasanteil bei kalter Brennkraftmaschine 1. Für den Bag 1 der linke Balken die Gesamtemissionen, der nachfolgende Balken den Anteil bei kalter Brennkraftmaschine 1 und der dritte Balken den Anteil bei warmer Brennkraftmaschine 1.

Da bei kalter Brennkraftmaschine 1 die Erwärmung der Brennkraftmaschine 1 sowie die besonderen Betriebsbedingungen der Brennkraftmaschine 1 im Warmlauf Vorrang haben, ist die Verstellung der Auslaßnockenwelle 5 hier nicht wirksam. In allen anderen Bereich, d.h. im Warmanteil des Bag 1, im Bag 2 und im Bag 3 können jedoch die HC-Rohemissionen deutlich in einer Größenordnung von ca. 30% gesenkt werden.

## Patentansprüche

1. Brennkraftmaschine mit folgenden Merkmalen:
- einer Verstellvorrichtung (4) für eine Auslaßnockenwelle (5),
- einer Zündeinrichtung (7) und
- einer Steuereinrichtung (6) zur Ansteuerung der Verstellvorichtung (4) und der Zündeinrichtung (7), **dadurch gekennzeichnet, daß**
- die Steuereinrichtung (6) in einem Teillastbereich der Brennkraftmaschine (1) die Auslaßnockenwelle (5) in Richtung spät und einen Zündzeitpunkt (ZZP) der Zündeinrichtung (6) in Richtung spät verschiebt.

2. Brennkraftmaschine nach Anspruch 1, **dadurch gekennzeichnet, daß** die Zündsteuereinrichtung (6) den Zündzeitpunkt (ZZP) so weit Richtung spät verschiebt, daß ein spezifischer Brennstoffverbrauch (be) vor und nach der Verstellung der Auslaßnockenwelle (5) im wesentlichen gleich ist.

3. Brennkraftmaschine nach Anspruch 1 oder 2, **dadurch gekennzeichnet, daß** eine Verstellvorrichtung (2) für eine Einlaßnockenwelle (3) vorgesehen ist und die Steuereinrichtung (6) bei einer Verstellung der Auslaßnockenwelle (5) in Richtung spät gleichzeitig die Einlaßnockenwelle (3) in Richtung früh verstellt.

4. Brennkraftmaschine nach Anspruch 1, 2 oder 3, **dadurch gekennzeichnet, daß** eine Umschaltvorrichtung für einen Hub der Einlaßnockenwelle (3) vorgesehen ist und die Steuereinrichtung (6) bei einer Verstellung der Auslaßnockenwelle (5) in Richtung spät gleichzeitig den Hub der Einlaßnockenwelle (3) vermindert.

5. Verfahren zum Betrieb einer Brennkraftmaschine, **gekennzeichnet durch** die Schritte
- Erkennen eines Teillastbereiches
- Ansteuern einer Verstellvorrichtung (4) für die Auslaßnockenwelle (5) im Sinne einer Verstellung in Richtung spät
- Ansteuern einer Zündsteuereinrichtung (6) im Sinne einer Verstellung des Zündzeitpunktes (ZZP) in Richtung in Richtung spät.

6. Verfahren nach Anspruch 5, **dadurch gekennzeichnet, daß** das Ansteuern der Zündsteuereinrichtung (6) so bestimmt wird, daß ein spezifischer Brennstoffverbrauch (be) vor und nach der Verstellung der Auslaßnockenwelle (5) im wesentlichen gleich ist.

7. Verfahren nach Anspruch 5 oder 6, **dadurch gekennzeichnet, daß** zusätzlich zum Ansteuern Verstellvorrichtung (4) für die Auslaßnockenwelle (5) im Sinne einer Verstellung in Richtung spät eine Verstellvorrichtung (2) für eine Einlaßnockenwelle (3) im Sinne einer Verstellung in Richtung früh angesteuert wird.

8. Verfahren nach Anspruch 5, 6 oder 7, **dadurch gekennzeichnet, daß** zusätzlich zum Ansteuern Verstellvorrichtung (4) für die Auslaßnockenwelle (5) im Sinne einer Verstellung in Richtung spät eine Umschaltvorrichtung für einen Hub der Einlaßnockenwelle (3) im Sinne einer Verminderung des Hubes der Einlaßnockenwelle (3) angesteuert wird.

## Claims

1. An internal-combustion engine with the following features:
- an adjustment device (4) for an exhaust camshaft (5),
- an ignition device (7) and
- a control device (6) for actuating the adjustment device (4) and the ignition device (7),
**characterized in that**
- in a partial-load range of the internal-combustion engine (1) the control device (6) displaces the exhaust camshaft (5) with a delay and an ignition moment (**ZZP**) of the ignition device (6) [*sic - recte* (7)] with a delay.

2. An internal-combustion engine according to Claim 1, **characterized in that the** ignition-control device (6) displaces the ignition moment (**ZZP**) so far with a delay that a specific fuel consumption (**be**) is substantially the same before and after the adjustment of the exhaust camshaft (5).

3. An internal-combustion engine according to Claim 1 or 2, **characterized in that** an adjustment device (2) for an intake camshaft (3) is provided, and when the exhaust camshaft (5) is adjusted with a delay the control device (6) adjusts the intake camshaft (3) with an advance at the same time.

4. An internal-combustion engine according to Claim 1, 2 or 3, **characterized in that** a change-over device for a stroke of the intake camshaft (3) is provided, and when the exhaust camshaft (5) is adjusted with a delay the control device (6) reduces the stroke of the intake camshaft (3) at the same time.

5. A method of operating an internal-combustion engine, **characterized by** the steps:
- detecting a partial-load range,
- actuating an adjustment device (4) for the exhaust camshaft (5) so as to adjust it with a delay,
- actuating an ignition-control device (6) so as to adjust the ignition moment (**ZZP**) with a delay.

6. A method according to Claim 5, **characterized in that** the actuation of the ignition-control device (6) is set in such a way that a specific fuel consumption (be) is substantially the same before and after the adjustment of the exhaust camshaft (5).

7. A method according to Claim 5 or 6, **characterized in that,** in addition to the actuation of the adjustment device (4) for the exhaust camshaft (5) so as to adjust it with a delay, an adjustment device (2) for an intake camshaft (3) is actuated so as to be adjusted with an advance.

8. A method according to Claim 5, 6 or 7, **characterized in that,** in addition to the actuation of the adjustment device (4) for an exhaust camshaft (5) so as to adjust it with a delay, a change-over device for a stroke of the intake camshaft (3) is actuated so as to reduce the stroke of the intake camshaft (3).

## Revendications

1. Moteur à combustion interne présentant les caractéristiques suivantes :
- un dispositif de réglage (4) pour un arbre à cames d'échappement (5),
- un dispositif d'allumage (7), et
- un dispositif de commande (6) pour la commande du dispositif de réglage (4) et du dispositif d'allumage (7),
**caractérisé en ce que** :
- dans un domaine de charge partielle du moteur à combustion interne (1), le dispositif de commande (6) déplace l'arbre à cames d'échappement (5) dans le sens du retard, et un instant d'allumage (ZZP) du dispositif d'allumage (6) dans le sens du retard.

2. Moteur à combustion interne selon la revendication 1, **caractérisé en ce que** le dispositif de commande d'allumage (6) déplace dans le sens du retard l'instant d'allumage (ZZP) suffisamment pour qu'une consommation spécifique de carburant soit sensiblement égale avant et après le réglage de l'arbre à cames d'échappement (5).

3. Moteur à combustion interne selon la revendication 1 ou 2, **caractérisé en ce qu'**un dispositif de réglage (2) est prévu pour l'arbre à cames d'admission (3), et le dispositif de commande (6) déplace en même temps l'arbre à cames d'admission (3) dans le sens de l'avance, lors d'un réglage de l'arbre à cames d'échappement (5) dans le sens du retard.

4. Moteur à combustion interne selon la revendication 1, 2 ou 3, **caractérisé en ce qu'**il est prévu un dispositif de commutation pour une course de l'arbre à cames d'admission (3), et le dispositif de commande (6) réduit en même temps la course de l'arbre à cames d'admission (3) lors d'un réglage de l'arbre à cames d'échappement (5) dans le sens du retard.

5. Procédé pour faire fonctionner un moteur à combustion interne, **caractérisé par** les étapes suivantes :
- reconnaissance d'un domaine de charge partielle,
- commande d'un dispositif de réglage (4) pour l'arbre à cames d'échappement (5) dans le sens d'un réglage de retard,
- commande d'un dispositif de commande d'allumage (6) dans le sens d'un réglage de l'instant d'allumage (ZZP) dans le sens du retard.

6. Procédé selon la revendication 5, **caractérisé en ce que** la commande du dispositif de commande d'allumage (6) est déterminée de manière qu'une consommation spécifique de carburant soit sensiblement la même avant et après le réglage de l'arbre à cames d'échappement (5).

7. Procédé selon la revendication 5 ou 6, **caractérisé par le fait que**, out la commande du dispositif de réglage (4) pour l'arbre à cames d'échappement (5) dans le sens d'un réglage de retard, un dispositif de réglage (2) pour un arbre à cames d'admission (3) est commandé dans le sens d'un réglage d'avance.

8. Procédé selon la revendication 5, 6 ou 7, **caractérisé par le fait que**, outre la commande du dispositif de réglage (4) pour l'arbre à cames d'échappement (5) dans le sens d'un réglage de retard, un dispositif de commutation est commandé pour une course de l'arbre à cames d'admission (3) dans le sens d'une réduction de la course de l'arbre à cames d'admission (3).
